# EUROPEAN PATENT SPECIFICATION

(11) **EP 3 302 823 B1**
(45) Date of publication and mention of the grant of the patent: **13.02.2019**
(21) Application number: 16730536.6
(22) Date of filing: 23.05.2016
(51) Int. Cl.: B05B 12/26

(54) **A PROTECTION SET USED IN THE PRODUCTION OF ELECTRICALLY ISOLATED BEARINGS**
SCHUTZSET ZUR VERWENDUNG IN DER HERSTELLUNG VON ELEKTRISCH ISOLIERTEN LAGERN
ENSEMBLE DE PROTECTION UTILISÉ DANS LA PRODUCTION DE PALIERS ISOLÉS ÉLECTRIQUEMENT

(30) Priority: 25.05.2015 TR 201506311
(43) Date of publication of application: 11.04.2018
(73) Proprietor: Ortadogu Rulman Sanayi Ve Ticaret Anonim Sirketi, 06901 Ankara (TR)
(72) Inventor: MERDANE, Hamdullah, 06900 Ankara (TR)
(74) Representative: Berkkam, Ayfer
(86) International application number: PCT/TR2016/050152
(87) International publication number: WO 2016/190832

(56) References cited:
- DE-C1- 19 616 449
- US-A1- 2013 301 971

## Description

### Technical Field

This invention is related to a protection set used in the production of electrically isolated bearings.

The invention is particularly related to a protection set which enables the protection of inner surfaces of the external bearing rings, during the coating of the external rings of the bearing with isolation materials such as polyamide, in order to provide electrical isolation.

### Prior Art

Damages in the rolling paths occur due to arcs formed between the rings and balls by the electric current that reaches the bearing during rotation and adhesion in the rolling paths of balls also occur in bearings used in high voltage electricity systems (especially in electric engines). For this reason various technical solutions that intend to prevent the electric current received at the bearing to reach the balls inside the bearing of the external ring are known in the art.

Some of these technical solutions is to primarily coat the external ring of the bearing with ceramic, to mount isolating materials between the outer ring of the bearing and the slot into which the bearing is mounted in; or to place a polyamide ring over the external diameter of the bearing, to use an isolating (ceramic) ball, and to coat the external ring of the bearing with isolating material such as polyamide.

Amongst these applications, coating the outer ring of the bearing with an isolating material such as polyamide, is the most preferred application.

Basically two methods are applied when coating the external ring of the bearing with an isolating material such as polyamide. The first one of these methods is to spray coat the external ring of the bearing with polyamide. The second method comprises the dipping of the external ring of the bearing into a vessel containing polyamide in powder form. In both applications, it is enabled for the bearing external ring to be coated with polyamide material.

In the international patent document numbered WO2011128325 within the known state of the art, the method of coating the external ring of the bearing with polyamide (polyamide-11 or polyamide 12) in order to provide electric isolation is mentioned. Said coating is carried out by means of spraying.

In the German patent document numbered DE 19616449 C1 within the known state of the art, the method of partially coating structural components which have at least one recess is disclosed. In the method, a region bordering the recess, destined to remain clear of coating, is covered. A releasable fastener is introduced into the recess. The cover may be removed after coating, without disrupting the coating, using an attached device.

In the United States patent document numbered US 2013/301971 within the known state of the art, a bearing seal, which has a rubber body impregnated with an electrically conductive material such as graphite, is enclosed. A bearing is also disclosed, which includes at least one closure element, such as a seal, arranged between an outer and inner ring of the bearing that is impregnated with an electrically conductive material, such as graphite, to create a conductive pathway for an electrical current to circumvent the rolling elements of the bearing.

However the problem faced in these applications is that while the external surface of the external ring of the bearing is aimed to be coated, at the same time the internal surface of the outer ring of the bearing needs to be protected. As the isolating material adheres to the internal surface of the external ring, these internal surfaces need to be cleaned. This process brings about a significant amount of work load. Moreover if the internal surface of the outer ring of the bearing cannot be thoroughly cleaned, in such a case other problems can be faced.

Due to all of these reasons, while the external surface of the outer ring of the bearing is enabled to be coated via an isolating material, a need to provide an improvement to protect the internal surfaces of the external ring of the bearing has risen.

### Brief Description of the Invention and it Aims

The aim of this invention is to provide a protection set which enables to protect the internal surface of the of the external ring of the bearing, while at the same time the external surface and the side surfaces of the bearing's external ring is being coated with isolation material in order to provide electric isolation for the bearing.

Another aim of this invention is to develop a protection set where, while both the spraying and dipping methods are being applied, the internal surface of the bearing external ring is efficiently protected at the same time.

Another aim of the invention is to provide a protection set which does not necessitate additional workload, and which can be easily mounted on the external ring before the application of coating the external ring of the bearing with an isolating material, and which be easily dismounted from the external ling following the coating application.

Another aim of the invention is to provide a protection set which does not damage the coating material at the coated external surface and side surfaces, when said protection set is being dismounted from the external ring.

The protection set, according to claim 1, is provided in order to reach the aims of the invention.

### Detailed Description of the Invention

The protection set provided in order to reach the aims of this invention has been shown in the attached figures.

According to the figures;
**Figure 1****-** Is the perspective view of the protection set subject to the invention mounted onto the external ring.

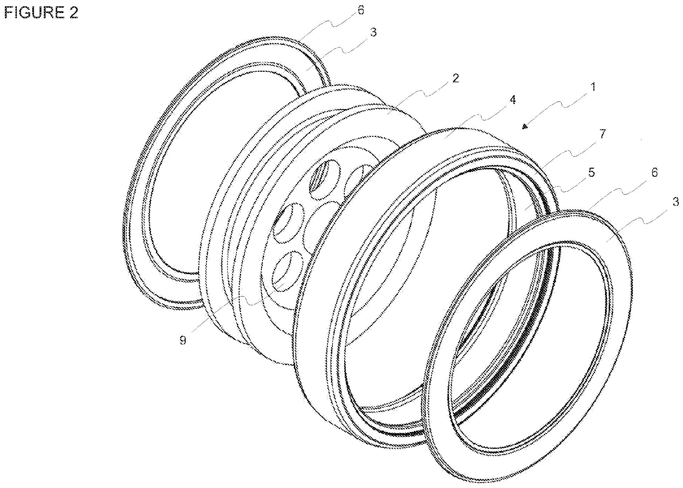

**Figure 2****-** Is the perspective view of the protection set subject to the invention without it being mounted onto the external ring.
**Figure 3****-** Is the partial section view of the protection set subject to the invention with protection set mounted onto the external ring.

The parts in the figures have each been numbered and their references have been listed below;
1. External ring
2. Prosthesis
3. Cover
4. External surface
5. Inner surface
6. Cover latch
7. Side surface
8. Side surface flange
9. Prosthesis hole

The protection set subject to the invention comprises a prosthesis (2) mounted into the external ring of the bearing (1) such that it completely covers the inner surface (5) of the bearing's external ring, and covers (3) that are attached to the external ring (1) of the bearing on both sides of the bearing's external ring (1) in order to fasten the prosthesis (2) to the bearing's external ring (1). The protection set subject to the invention comprises cover latches (6) located around said covers, which are inserted into the side surface flange (8) such that they enable to fix the covers (3) to the external ring of the bearing (1) by being inserted into the external ring of the bearing (1) and such that they enable the fixing of the prosthesis (2) that has been previously placed into the bearing's external ring (1) to the external ring of the bearing (1).

The protection set subject to the invention comprises masking holes (9) on the prosthesis (2) in order to be able to grip or hang the external ring (1) of the bearing during the coating of the external ring (1) or during drying following the coating process.

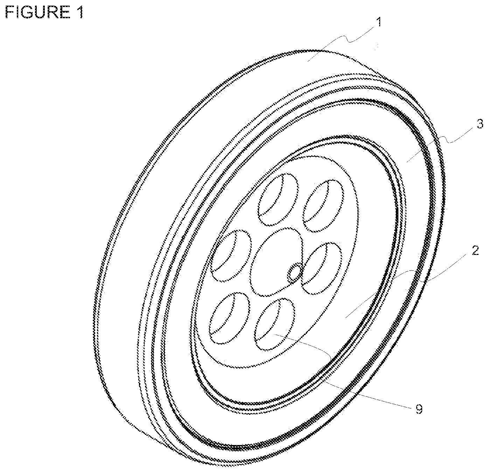

First of all the prosthesis (2) is fitted inside the external ring (1) of the bearing that is desired to be coated. The prosthesis (2) has such geometry that it completely covers the inner surface (5) of the external ring of the bearing. When the prosthesis (2) that is cylindrical is fitted into the external ring (1) of the bearing, it completely covers the inner surface (5) of the external ring. (Figure 1)
Side surfaces are provided (7) at the edges of the external surface (4) of the external ring (1) of the bearing. These side surfaces (7) also need to be coated.

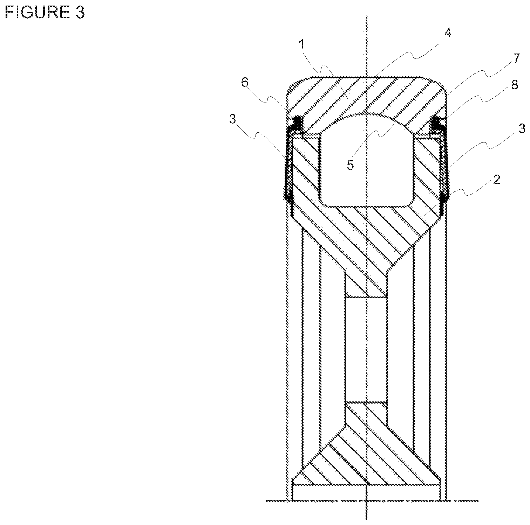

The covers (3) should not enclose the side surfaces (7) in order to ensure that these side surfaces (7) are coated together with the side surfaces (4). For this reason a cover latch (6) is provided around the covers (3) in order to be inserted into the side surface flange (8) located at the ends of the side surfaces (7) (Figure 3).

After the prosthesis (2) is fitted inside the external ring (1), the cover latches (6) of the covers (3) are inserted into the side surface flanges (8) located at the ends of the side surfaces (7) (Figure 3). By this means the covers (3) shall not be covering the side surfaces (7) and it shall be enabled for the covers (3) to be fixed to the external ring (1) and in turn for the prosthesis (2) to be fixed to the external ring. (Figure 1 and Figure 3).

Following the mounting of the prosthesis (2) and the covers (3), the external ring (1) of the bearing shall be ready for the coating process. By means of the protection set, in every application, whether a spraying or dipping technique is used, the external surface (4) and the side surfaces (7) of the external ring (1) of the bearing shall be coated completely. During this stage, as the prosthesis (2) and the cover (3) shall be protecting the inner surfaces (5), the coating shall be prevented from reaching the inner surface (5).

By means of the protection set subject to the invention, an application which does not necessitate a workload and which is not time consuming is provided which can be easily mounted onto the external ring (1) of the bearing. The inner surface of the external ring (1) of the bearing is also protected efficiently by means of this set. Moreover by attaching the cover latches (6) of the covers (3) into the side surface flanges (8), both the efficient coating of the side surfaces is provided and it is ensured that the coating of the side surfaces (7) is not damaged while said covers (3) are being dismounted.

## Claims

1. A protection set in order to protect the inner surface (5) of the external ring (1) of the bearing at the stage of coating the bearing's external ring (1) with an isolating material during the production of an electrically isolated bearing, comprising;
- a prosthesis (2) mounted inside the external ring (1) of the bearing such that it completely wraps around the inner surface (5) of the external ring of the bearing, and
- covers (3) mounted to the external ring (1) of the bearing from both sides of the external ring (1) of the bearing in order to be fixed to the masking (2) of the external ring (1) of the bearing,
**characterized in that** the said protection set also comprises;
- a cover latch (6) which is inserted into the inside of the side surface flange (8) such that it enables the covers (3) to be fixed to the external ring of the bearing by entering into the external ring of the bearing (1) around the covers, and in turn such that it enables to fix the prosthesis (2) that has been previously mounted into the external ring of the bearing (1) to the external ring (1) of the bearing.

## Patentansprüche

1. Schutzsatz zum Schutz der Innenfläche (5) des Außenrings (1) des Lagers in der Phase der Beschichtung des Außenrings (1) des Lagers mit einem Isoliermaterial bei der Herstellung eines elektrisch isolierten Lagers, umfassend;
- eine Prothese (2), die innerhalb des Außenrings (1) des Lagers so montiert ist, dass sie sich vollständig um die Innenfläche (5) des Außenrings des Lagers wickelt, und
- Abdeckungen (3), die von beiden Seiten des Außenrings (1) des Lagers an dem Außenring (1) des Lagers montiert sind, um an der Maskierung (2) des Außenrings (1) des Lagers befestigt zu werden,
**dadurch gekennzeichnet, dass** das Schutzset auch umfasst;
- eine Abdeckungsverriegelung (6), die in die Innenseite des Seitenflächenflansches (8) so eingesetzt ist, dass sie es ermöglicht, die Abdeckungen (3) am Außenring des Lagers zu befestigen, indem sie in den Außenring des Lagers (1) um die Abdeckungen herum eintritt, und wiederum die Prothese (2), die zuvor
in den Außenring des Lagers (1) eingesetzt wurde, an dem Außenring (1) des Lagers zu befestigen.

## Revendications

1. Ensemble de protection destiné à protéger la surface intérieure (5) de la bague extérieure (1) du palier au stade du revêtement de la bague extérieure (1) du palier avec un matériau isolant pendant la fabrication d'un palier isolé électriquement, comprenant;
- une prothèse (2) montée à l'intérieur de la bague extérieure (1) du palier de sorte qu'elle s'enroule complètement autour de la surface intérieure (5) de la bague extérieure du palier, et
- des deux côtés de la bague extérieure (1) du roulement, des couvercles (3) montés sur la bague extérieure (1) du roulement afin d'être fixés sur le masque (2) de la bague extérieure (1) du roulement,
**caractérisé en ce que** ledit ensemble de protection comprend également;
- un verrou de couvercle (6) qui est inséré à l'intérieur de la bride de surface latérale (8) de telle sorte qu'il permet aux couvercles (3) d'être fixés à la bague extérieure du palier en entrant dans la bague extérieure du palier (1) autour des couvercles, et de telle sorte qu'il permette de fixer la prothèse (2) qui a été préalablement montée dans la bague extérieure du palier (1) à la bague extérieure (1) du palier.
